(19) Europäisches Patentamt
European Patent Office
Office européen des brevets

(11) Publication number: 0 303 182 A2

(12) # EUROPEAN PATENT APPLICATION

(21) Application number: 88112696.5

(22) Date of filing: 04.08.88

(51) Int. Cl.4: C09D 5/44 , C08G 59/40 , C08G 18/64 , C08G 18/10 , C08G 18/58

(30) Priority: 13.08.87 US 85045

(43) Date of publication of application: 15.02.89 Bulletin 89/07

(84) Designated Contracting States: AT BE CH DE ES FR GB GR IT LI NL SE

(71) Applicant: THE DOW CHEMICAL COMPANY
2030 Dow Center Abbott Road P.O. Box 1967
Midland Michigan 48640-1967(US)

(72) Inventor: McIntyre, John M.
319 Petunia
Lake Jackson Texas 77566(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Cross-linking agent for controlled film build epoxy coatings applied by cathodic electrodeposition.**

(57) An improvement in a cathodic electrodepositable coating composition comprising an aqueous dispersion of (1) at least one blocked isocyanate crosslinker and (2) at least one cationic epoxy-based resin is obtained by employing as at least a portion of component (1) at least 20, percent by weight based on the total weight of component (1) at least one blocked isocyanate-containing prepolymer crosslinker composition wherein said isocyanate-containing prepolymer is the reaction product of a polyisocyanate and a polyether polyol.

EP 0 303 182 A2

# CROSS-LINKING AGENT FOR CONTROLLED FILM BUILD EPOXY COATINGS APPLIED BY CATHODIC ELECTRODEPOSITION

This invention pertains to the preparation of coating compositions containing blocked polyether polyol/polyisocyanate prepolymers and cationic epoxy-based resins and their application by cathodic electrodeposition.

Electrodeposition has become an important method for the application of coatings over the last two decades and continues to grow in popularity because of its efficiency, uniformity and environmental acceptance. Cathodic electrodeposition has become dominant in areas where highly corrosion-resistant coatings are required, such as in primers for automobile bodies and parts. Epoxy based systems provide the best overall performance in this application and are widely used.

Cathodic electrodeposition resins based on conventional epoxies obtained by reacting liquiddiglycidyl ethers of bisphenol A with bisphenol A to produce higher molecular weight epoxy resins have known disadvantages. Such products tend to have excessively high softening points resulting in poor flow out. In addition, such products require excessive amounts of solvent during their preparation. Thus, Bosso et al., United States Patent 3,839,252, describes modification with polypropylene glycol. Marchetti et al., United States Patent 3,947,339, teaches modification with polyesterdiols or polytetramethylene glycols. Wismer et al., United States Patent 4,419,467, describes still another modification with diols derived from cyclic polyols reacted with ethylene oxide. These various modifications, however, also have disadvantages. Tertiary amines or strong bases are required to effect the reaction between the primary alcohols and the epoxy groups involved. Furthermore, these reactions require long reaction times and are subject to gellation because of competitive polymerization of the epoxy groups by the base catalyst. In addition epoxy resins containing low levels of chlorine are required to prevent deactivation of this catalyst.

Anderson et al. U.S. Patent 4,575,523, discloses a film-forming resin composition which when combined with a crosslinking agent and solubilized, is capable of depositing high build coatings in cathodic electrodeposition processes. The resin is a reaction product of a modified epoxy formed by reacting a water-soluble or water-miscible polyol, an excess of polyamine, and an aliphatic monoepoxide.

Numerous U.S. Patents teach the use of blocked isocyanates as crosslinkers for film forming compositions in the cathodic electrodeposition process. In addition to the previously cited case of Anderson et al., U.S. Patents 4,575,523; 3894,922; 3,947,339; 3,984,299; 3,959,106; 4,017,438; 4,038,232; 4,101,486; 4,435,559; 4,260,697; 4,297,255; 4,310,646; 4,315,840; 4,393, 179; 4,176,221; 4,182,831; 4,182,833; 4,225,478; 4,225,479; and 4,339,369 disclose various blocked isocyanate crosslinkers useful in cathodic electrodeposition formulations.

U.S. Patents 3,935,087; 3,847,338; 4,007,154; 4,009,133; 4,040,924; 4,081,343; 4,134,865; and 4,134,866 teach the use of partially blocked isocyanate crosslinkers which are reacted with base cationic resins that are useful in cathodic electrodeposition formulations. The use of blocked polyether/isocyanate prepolymers in these cited patents are taught as being equivalent to the other crosslinkers. Their novel properties in cathodic electrodeposition coatings were not recognized.

Example 1 of Canadian Patent 1,138,463 teaches the use of a blocked isocyanate crosslinking agent composed of the reaction product of one mole of glycerine with three moles of propylene oxide to which was added 4.5 moles of toluene diisocyanate, subsequently blocked completely with 2-ethylhexanol. The use of this crosslinker in cathodic electrodeosited coatings did not produce high build films since the quantity of the polyether triol, produced from the reaction of glycerine and propylene oxide, was insuffucient.

U.S. Patent 4,608,313 and U.K. Patents 2,121,804A and 2,129,808B teach the use of methyl ethyl ketoxime blocked toluene diisocyanate/polyoxypropylene glycol prepolymer in formulations containing epoxy resins for use in can, coil and automotive primer coatings. The polyoxypropylene glycol had an average molecular weight of 425. Although this crosslinker will enhance film builds in electrodeposited coatings it was not formulated for that purpose; therefore, the novel property was unknown and therefore not disclosed.

Many coating formulations applied by electrodeposition include pigments to provide color, opacity, application, or film properties. U.S. Patent 3,936,405, Sturni et al., describes pigment grinding vehicles especially useful in preparing stable, aqueous pigment dispersions for water-dispersible coating systems, particularly for application by electrodeposition. The final electrodepositable compositions, as described, contain the pigment dispersion and an ammonium or amine salt group solubilized cationic electrodepositable epoxy-containing vehicle resin and other ingredients typically used in electrodepositable compositions.

The automobile industry still has needs in the areas of controlled film thickness. The ability to build

thicker, uniform films which are smooth and free of defects will allow the elimination of an intermediate layer of paint known as a primer surface or spray primer, previously required to yield a sufficiently smooth surface for the topcoat. Such an elimination results in removal of one paint cycle and provides more efficient operations. Thicker electrocoat primers may also provide improved corrosion resistance.

The present invention employs a urethane-type crosslinker which, when blended with a resin onium and dispersed in an aqueous solvent, can be used to control the film build (thickness) of the resulting electrodeposited coat. There is a need in the electrodeposition coating industry to vary the coating thicknesses. This is usually accomplished by modifying the coating resin. It has been determined that the described crosslinker produces thicker coatings than similar crosslinkers. Therefore, the present invention controls the film build of the coating by means of the crosslinker employed instead of modifying the resin component of the coating formulation. This is advantageous since simple resin systems which would not require modification could be used and still control the film build of the coating composition. Also, these crosslinkers contain low levels of chloride. This is advantageous since chloride can be detrimental to the coating performance.

The present invention pertains to an improvement in a cathodic electrodepositable coating composition comprising an aqueous dispersion of (1) at least one blocked isocyanate crosslinker and (2) at least one cationic epoxy based resin; characterized by employing as at least a portion of component (1), suitably at least 20, more suitably at least 50, percent by weight based on the total weight of component (1) at least one blocked isocyanate-containing prepolymer crosslinker composition wherein said isocyanate-containing prepolymer is the reaction product of a polyisocyanate and a polyether polyol.

Another aspect of the present invention pertains to a method of coating a composition comprising a blocked isocyanate crosslinker and a cationic, epoxy resin-based composition onto an object having an electroconductive surface by the steps comprising

(1) immersing the electroconductive object into a coating bath comprising an aqueous dispersion of cationic particles of the epoxy resin-based composition and a blocked isocyanate crosslinker;

(2) passing an electric current through said bath sufficient to electrodeposit a coating of said composition onto the object by providing a difference in electrical potential between the object and an electrode that is

(a) spaced apart from said object;

(b) in electrical contact with said bath; and

(c) electrically positive in relation to said object; and

(3) thermally curing the deposited coating; characterized by employing as the blocked isocyanate crosslinker, a prepolymer prepared by reacting at least one polyisocyanate with at least one polyether polyol.

Another aspect of the present invention pertains to the product resulting from the aforementioned process.

Unexpectedly, incorporation of the blocked isocyanates prepared from prepolymers prepared from polyisocyanates and polyether polyols as the crosslinker in cathodically electrodepositable coating compositions provides the composition with the ability to build thicker films having controlled thickness during the electrodeposition process, as compared to a similar composition using a crosslinker not containing the polyether polyol component. The ability to deposit thicker films is highly desirable for reducing the number of paint applications required while improving the corrosion resistance and appearance of the electrodeposited coating. The film thickness can be controlled by adjusting the amount of the polyetherpolyol incorporated into the crosslinker. Generally, thickness increases with increasing content of this component.

Finally, coatings produced using these crosslinkers have greater flexibility due to incorporation of the polyetherpolyol component as compared to those based on similar crosslinkers not containing that component.

All of the coating compositions of the invention provide useful cathodically electrodepositable coatings having improved film build, and flexibility properties due to the incorporation of the crosslinker containing the polyetherpolyol as a component of the coating.

The improvement of the present invention is provided by certain blocked polyisocyanate prepolymer crosslinkers which, when combined with a cationic epoxy-base resin onium and dispersed in water, can be used to control the film thickness of the resulting electrodeposited coating.

Electrodeposition formulations are generally composed of a resin onium, its counter ions, solvents, water and a crosslinking agent. Blocked isocyanates are often used as crosslinking agents via urethane crosslinking. The product of this invention consists of a blocked polyisocyanate prepolymer curing agent which when combined in an electrodeposition formulation controls the film build (thickness). The crosslinker

is produced by reacting a polyether polyol with a polyisocyanate followed by reacting the remaining free isocyanate groups with a blocking agent. The following formula is given as an example of a suitable isocyanate-containing prepolymer prepared from a diisocyanate and a polyether diol prior to being blocked.

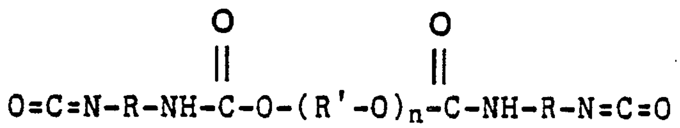

where R and R′ are organic constituents and n can vary from 3 to 25. The R groups are derived from the diisocyanate whereas the R′ groups are derived from the polyether diol. The blocked crosslinking agent when blocked with an alcohol can be represented by the following formula:

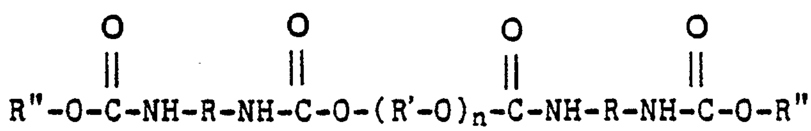

where R and R′, and n are as defined above and R″ is an organic constituent derived from an alcohol employed as the blocking agent.

The crosslinker can also consist of blends of a blocked isocyanate and a blocked isocyanate-containing prepolymer. For example, the crosslinker can be a blend of toluene diisocyanate and a toluenediisocyanate/polyether diol prepolymer, blocked with 2-ethyl hexanol. This crosslinker is a mixture of the products represented by the following formulas:

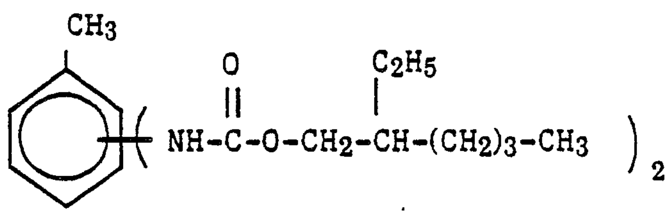

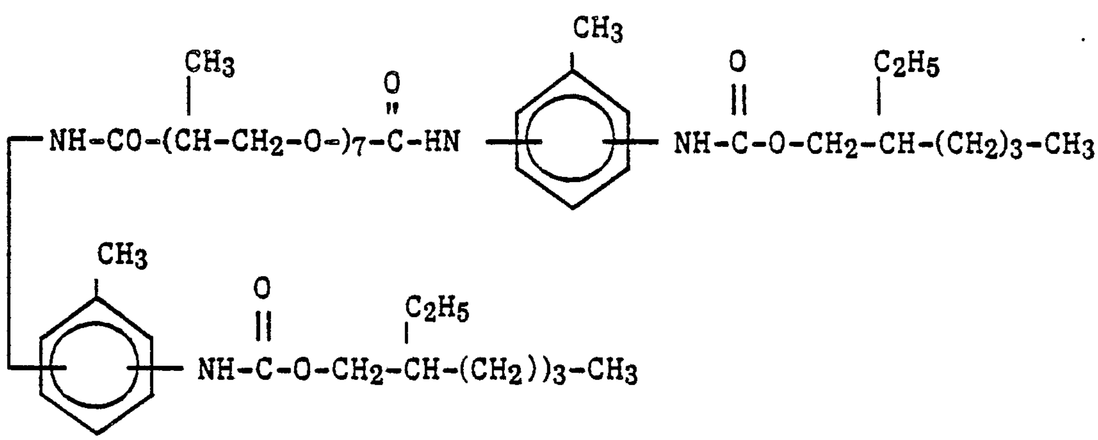

Suitable polyether polyols which can be employed to prepare the prepolymer include, those represented by the formula

$$Z-((O-\underset{\displaystyle R'''}{\overset{|}{C}}H-(CH_2-)_{n'})_m-OH)_x$$

wherein each R‴ is independently hydrogen or an aliphatic, cycloaliphatic or aromatic hydrocarbon group having suitably from 1 to 10, more suitably from 1 to 4, most suitably from 1 to 2 carbon atoms; Z is the residue remaining from the removal of x hydroxyl groups from an organic compound containing at least 2 hydroxyl groups per molecule; m has an average value suitably from 2 to 30, more suitably from 3 to 10, most suitably from 3 to 6; n′ has a value from 1 to 6 and x has a value from 2 to 6, suitably from 2 to 4, more suitably from 2 to 3.

Suitable compounds which can be employed as the polyether polyol include, for example, polyoxyethylene glycols, polyoxypropylene glycols, adducts of hydroxyl-containing compounds such as, example, ethylene glycol, propylene glycol, 1,4-butanediol, 1,6-hexanediol, neopentylglycol, dibromoneopentylglycol, glycerine, trimethylolpropane, and combinations thereof with an alkylene oxide such as, for example, ethylene oxide, propylene oxide, butylene oxide, and combinations thereof.

Suitable polyisocyanates which can be employed to prepare the isocyanate-containing prepolymer include, for example those described by Bosso, et al in U.S. Patent 3,959,106. Particularly suitable polyisocyanates include, for example, toluene diisocyanate, diphenylmethane diisocyanate, isophorone diisocyanate, hexamethylene diisocyanate, hydrogenated diphenylmethane diisocyanate, the isocyanurate trimer of hexamethylene diisocyanate, and combinations thereof.

Suitable blocking agents include, for example, alcohols, phenols, oximes, lactams, N,N-dialkylamides, esters of α-hydroxyl group-containing carboxylic acids, and the like. Suitable such blocking agents are described in the aforementioned U.S. Patent 3,959,106 to Bosso, et al. Particularly suitable blocking agents are, for example, oximes of ketones, also known as ketoximes, due to their tendency to deblock at relatively lower temperatures and provide a coating composition which can be cured at significantly lower temperatures. The blocking agent is employed in amounts which provide enough blocking agent to react with (block) substantially all of the isocyanate groups contained in the isocyanate-containing prepolymer.

The blocked isocyanate is employed in quantities which provide from 0.2 to 1.2, more suitably from 0.3 to 1, most suitably from 0.5 to 0.8 blocked isocyanate groups per reactive hydroxyl group and/or amine hydrogen atom contained in the epoxy resin-based onium resin.

The preparation of blocked prepolymer crosslinker is usually conducted in two steps. The prepolymer can be prepared by reacting the polyether polyol with the isocyanate followed by the blocking step. Alternatively, the order of these reactions can be reversed or they can be combined into a single step process. The reactions are typically conducted in an inert atmosphere such as nitrogen at temperatures between 25°C and 100°C, more suitably between 25°C and 70°C so as to control the exothermic reaction. A solvent compatible with the reactants, product and the coating composition can be employed such as, for example, a ketone or an ester.

The isocyanate-containing prepolymers can be prepared by reacting the polyisocyanate with the polyether polyol in the presence of a suitable catalyst such as a metal carboxylate such as, for example, dibutyltin dilaurate. The polyisocyanate and the polyether polyol are reacted in quantities which provide a ratio of hydroxyl groups to isocyanate groups of from 0.1:1 to 0.7:1, suitably from 0.2:1 to 0.6:1, more suitably from 0.25:1 to 0.5:1.

## The Cathodic Electrodeposition Resin

Preferred kinds of electrodepositable resins are epoxy-based resin, particularly those resins containing a reacted glycidyl ether of a dihydric phenol which has been advanced with a dihydric phenol such as bisphenol A. Conventional epoxy resins obtained by reacting liquid glycidyl ethers of bisphenol A with bisphenol A are among the more specific examples of suitable epoxy-based resins. Useful glycidyl ethers of dihydric phenols include those represented by the formulas:

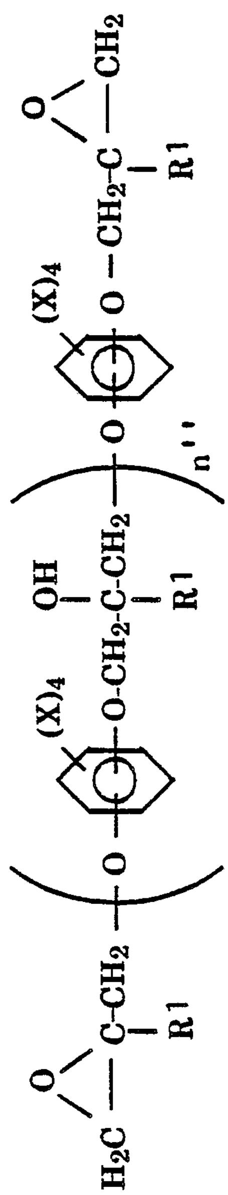

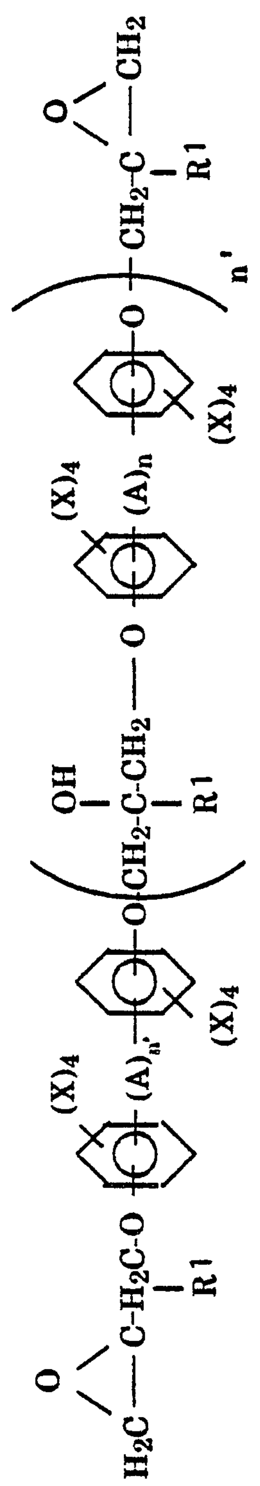

wherein each A is independently a divalent hydrocarbon group having suitably from 1 to 12, more suitably from 1 to 6, carbon atoms, -S-, -S-S-, -SO-, $-SO_2-$, -SO-, -O-CO-O-, or -O-; each X is independently hydrogen, a hydrocarbyl or hydrocarbyloxy group having from 1 to 4 carbon atoms, or a halogen, preferably chlorine or bromine; each $R^1$ is independently hydrogen or an alkyl group having from 1 to 3 carbon atoms; $m'$ has a value from zero to 1; and $n'$ has a value from zero to 40, preferably from 0.1 to 5.

The term hydrocarbyl as employed herein includes, alkyl, cycloalkyl, aryl, aralkyl, alkaryl, alkenyl and the like. Likewise, the term hydrocarbyloxy as employed herein includes, alkyloxy, cycloalkyloxy, aryloxy, aralkyloxy, alkaryloxy, alkenyloxy and the like.

Polyphenols useful for the production of these polyepoxides include, for example, 2,2-bis(4-hydroxyphenyl)propane (bisphenol A), 1,1-bis(4-hydroxyphenyl)ethane, bis(4-hydroxyphenyl)methane (bisphenol

F), p, p′-hydroxybiphenol, resorcinol, hydroquinone or the like. The particularly preferred polyglycidyl ethers of polyphenols are the diglycidyl ether of bisphenol A and the oligomeric polyglycidyl ethers of bisphenol A.

The use of capping agents such as monofunctional phenolic compounds provides the advantageous ability to reduce the epoxide content of the resulting product without chain-extension reactions and thus allows independent control of the average molecular weight and the epoxide content of the resulting resin within certain limits. Use of a monofunctional compound to terminate a certain portion of the resin chain ends also reduces the average epoxy functionality of the reaction product. The monofunctional phenolic compound is typically used at levels of from zero to 0.7 equivalent of phenolic hydroxyl groups per equivalent of epoxy.

Examples of useful monofunctional capping agents are monofunctional phenolic compounds such as phenol, tertiary-butyl phenol, cresol, para-nonyl phenol, higher alkyl substituted phenols, and the like. Particularly preferred is para-nonyl phenol. The number of phenolic groups are chosen so that there will be a stoichiometric excess of epoxide groups. Ratios are chosen so that the resulting product will contain the desired concentration of terminal epoxy groups and the desired concentration of resin chain ends terminated by the monophenolic compound after substantially all of the phenolic groups are consumed by reaction with epoxy groups. Usually, the amount of the capping agent is from 1 percent to 15 percent based on the total weight of the components.

These amounts are dependent on the respective equivalent weights of the reactants and the relative amounts of the epoxy-functional components and may be calculated by methods known in the art. In the practice of this invention, the desired epoxide content of the reaction product useful for preparation of the cationic resin is typically between 1 and 5 percent, calculated as the weight percentage of oxirane groups, and preferably is from 2 to 4 percent. These levels are preferred because they provide, after con-version, the desired cationic charge density in the resinous products useful in cathodic electrodeposition. These cationic resins are produced by conversion of part or all of the epoxy groups to cationic groups as described below.

Reactions of the monofunctional capping agent to produce the epoxy resins are typically conducted by mixing the components and heating, usually in the presence of a suitable catalyst, to temperatures between 130 °C and 225 °C, preferably between 150 °C and 200 °C, until the desired epoxide content of the product is reached. The reaction optionally may be conducted in an appropriate solvent to reduce the viscosity, facilitate mixing and handling, and assist in controlling the heat of reaction.

Many useful catalysts for the desired reactions are known in the art. Examples of suitable catalysts include ethyltriphenylphosphonium acetate•acetic acid complex, ethyltriphenylphosphonium chloride, bromide, iodide, or phosphate, and tetrabutylphosphonium acetate. The catalysts are typically used at levels of 0.01 to 0.5 mole percent of the epoxide groups.

Several kinds of epoxy-based resins which can be used are described in various patents as follows: Jerabek in U.S. Patent 4,031,050 describes cationic electrodeposition resins which are the reaction of epoxy-based cationic resins which are the reaction products of an epoxy-based resin and primary or secondary amines. U.S. Patent 4,017,438 to Jerabek et al. describes reaction products of epoxy-based resins and blocked primary amines. Bosso et al. describe in U.S. Patents 3,962,165; 3,975,346; 4,001,101 and 4,101,486 cationic electrodeposition resins which are reaction products of an epoxy-based resin and tertiary amines. Bosso et al. in U.S. Patent 3,959,106 and DeBona in U.S. Patent 3,793,278 describe cationic electrodeposition resins which are epoxy-based resins having sulfonium salt groups. Wessling et al. in U.S. Patent 4,383,073 describes cationic electrodeposition resins which are epoxy-based resins having carbamoylpyridinium salt groups. U.S. Patent 4,419,467 to Bosso et al. discusses epoxy-based resins reacted with primary, secondary and tertiary amine groups as well as quarternary ammonium groups and ternary sulfonium groups. U.S. Patent 4,076,676 to Sommerfeld describes aqueous dispersions of epoxy-based cationic resins which are the reaction products of a terminally functional epoxy resin, a tertiary amine and a nitrogen resin. U.S. Patent 4,134,864, to Belanger, describes reaction products of epoxy-based resins, polyamines and a capping agent. Still other suitable resins for use in the blends of this invention are described in the patents in the following list:

| United States Patent | Patentee |
|---|---|
| 4,182,831 | Hicks |
| 4,190,564 | Tominaga et al. |
| 4,296,010 | Tominaga |
| 4,335,028 | Ting et al. |
| 4,339,369 | Hicks et al. |

Also suitable as the epoxy-based resin in the present invention are any of the aforementioned epoxy resins which have been partially capped with the aforementioned capping agents. The amount of the capping agent is from zero to 0.7 equivalent per epoxide equivalent.

Appropriate solvents include aromatic solvents, glycol ethers, glycol ether esters, high boiling esters or ketones, or mixtures thereof. Other useful solvents will be apparent to those skilled in the art. Preferred solvents are ethylene glycol monobutylether and propylene glycol monophenylether. Solvent content may range from zero to 30 percent of the reaction mixture. A solvent is usually chosen which is compatible with the subsequent cation-forming reactions and with the final coating composition so that the solvent does not require subsequent removal.

The nucleophilic compounds which are used advantageously in forming the cations required by this invention are represented by the following classes of compounds, sometimes called Lewis bases:

(a) monobasic heteroaromatic nitrogen compounds,

(b) tetra (lower alkyl)thioureas,

(c) $R^3$-S-$R^2$ wherein $R^3$ and $R^2$ individually are lower alkyl, hydroxy lower alkyl or wherein $R^3$ and $R^2$ are combined as one alkylene radical having 3 to 5 carbon atoms

(d)

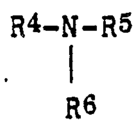

wherein $R^5$ and $R^6$ individually are lower alkyl, hydroxy lower alkyl,

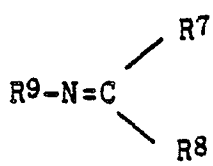

or are combined as one alkylene radical having from 3 to 5 carbon atoms, $R^9$ is an alkylene group having from 2 to 10 carbon atoms, $R^7$ and $R^8$ individually are lower alkyl and $R^4$ is hydrogen or lower alkyl, aralkyl or aryl, except that when $R^5$ and $R^6$ together are an alkylene group then $R^4$ is hydrogen, lower alkyl or hydroxyalkyl and when either or both of $R^5$ and $R^6$ is

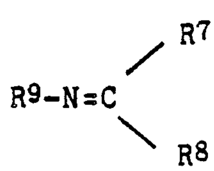

then $R^4$ is hydrogen,

(e)

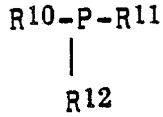

wherein $R^{10}$, $R^{11}$ and $R^{12}$ individually are lower alkyl, hydroxy lower alkyl or aryl.

In this specification the term lower alkyl means an alkyl having from 1 to 6 carbon atoms such as methyl, ethyl, propyl, isopropyl, n-butyl, isobutyl, n-pentyl, isopentyl, n-hexyl and isohexyl.

Representative specific nucleophilic compounds are pyridine, nicotinamide, quinoline, isoquinoline, tetramethyl thiourea, tetraethyl thiourea, hydroxyethyl- methyl sulfide, hydroxyethylethyl sulfide, dimethyl sulfide, diethyl sulfide, di-n-propyl sulfide, methyl-n-propyl sulfide, methylbutyl sulfide, dibutyl sulfide, dihydroxyethyl sulfide, bis-hydroxybutyl sulfide, trimethylene sulfide, thiacyclohexane, tetrahydrothiophene, dimethyl amine, diethyl amine, dibutyl amine, N-methylethanolamine, diethanolamine and the ketimine derivatives of polyamines containing secondary and primary amino groups such as those produced by the reaction of diethylene triamine or N-aminoethylpiperazine with acetone, methyl ethyl ketone or methylisobutyl ketone; N-methylpiperidine, N-ethylpyrrolidine, N-hydroxyethylpyrrolidine, trimethylphosphine, triethylphosphine, tri-n-butylphosphine, trimethylamine, triethylamine, tri-n-propylamine, triisobutylamine, hydroxyethyl dimethylamine, butyldimethylamine, trihydroxyethylamine, triphenylphosphorus, and N,N,N-dimethylphenethylamine.

Substantially any organic acid, especially a carboxylic acid, can be used in the conversion reaction to form onium salts so long as the acid is sufficiently strong to promote the reaction between the nucleophile and the vicinal epoxide group(s) on the resinous reactant. In the case of the salts formed by addition of acid to a secondary amine/epoxy resin reaction product, the acid should be sufficiently strong to protonate the resultant tertiary amine product to the extent desired.

Monobasic acids are normally preferred ($H^+A^-$). Suitable organic acids include, for example, alkanoic acids having from 1 to 4 carbon atoms (e.g., acetic acid, propionic acid, etc.), alkenoic acids having up to 5 carbon atoms (e.g., acrylic acid, methacrylic acid, etc.) hydroxy-functional carboxylic acids (e.g., glycolic acid, lactic acid, etc.) and organic sulfonic acids (e.g., methanesulfonic acid), and the like. Presently preferred acids are lower alkanoic acids of 1 to 4 carbon atoms with lactic acid and acetic acid being most preferred. The anion can be exchanged, of course, by conventional anion exchange techniques. See, for example, U.S. Patent 3,959,106 at column 19. Suitable anions are chloride, bromide, bisulfate, bicarbonate, nitrate, dihydrogen phosphate, lactate and alkanoates of 1-4 carbon atoms. Acetate and lactate are the most preferred anions.

The conversion reaction to cationic resins is normally conducted by merely blending the reactants together and maintaining the reaction mixture at an elevated temperature until the reaction is complete or substantially complete. The progress of the reaction is easily monitored. The reaction is normally conducted with stirring and is normally conducted under an atmosphere of inert gas (e.g., nitrogen). Satisfactory reaction rates occur at temperatures of from 25 °C to 100 °C, with preferred reaction rates being observed at temperatures from 60 °C to 80 °C.

Good results can be achieved by using substantially stoichiometric amounts of reactants although a slight excess or deficiency of the epoxy-containing resin or the nucleophile can be used. With weak acids, useful ratios of the reactants range from 0.5 to 1.0 equivalent of nucleophile per epoxide group of the resin and 0.6 to 1.1 equivalents of acid per epoxide. These ratios, when combined with the preferred epoxide content resins described above, provide the desired range of cationic charge density required to produce a stable dispersion of the coating composition in water. With still weaker acids (e.g., a carboxylic acid, such as acetic acid) a slight excess of acid is preferred to maximize the yield of onium salts. In preparing the compositions in which the cationic group being formed is an onium group, the acid should be present during the reaction of the nucleophile and the epoxy group of the resin. When the nucleophile is a secondary amine, the amine-epoxy reaction can be conducted first, followed by addition of the acid to form the salt and thus produce the cationic form of the resin.

For the onium-forming reactions, the amount of water that is also included in the reaction mixture can be varied to convenience so long as there is sufficient acid and water present to stabilize the cationic salt formed during the course of the reaction. Normally, it has been found preferable to include water in the reaction in amounts of from 5 to 30 moles per epoxy equivalent. When the nucleophile is a secondary amine, the water can be added before, during, or after the resin epoxy group/nucleophile reaction. The preferred range of charge density of the cationic, advanced epoxy resin is from 0.2 to 0.6 milliequivalent of charge per gram of the resin. The charge density can be determined by the method taught by Wismer et

al. in U.S. Patent 4,191,674.

It has also been found advantageous to include minor amounts of water-compatible organic solvents in the reaction mixture. The presence of such solvents tends to facilitate contact of the reactants and thereby promote the reaction rate. In this sense, this particular reaction is not unlike many other chemical reactions and the use of such solvent modifiers is conventional. The skilled artisan will, therefore, be aware of which organic solvents can be included. One class of solvents that we have found particularly beneficial are the monoalkyl ethers of the $C_2$-$C_4$ alkylene glycols. This class of compounds includes, for example, the monomethyl ether of ethylene glycol, the monobutyl ether of ethylene glycol, etc. A variety of these alkyl ethers of alkylene glycols are commercially available.

When a desired degree of reaction is reached, any excess nucleophile can be removed by standard methods, e.g., dialysis, vacuum stripping and steam distillation.

A catalyst optionally may be included in the coating composition to provide faster or more complete curing of the coating. Suitable catalysts for the various classes of crosslinking agents are known to those skilled in the art. For the coating compositions, suitable catalysts include dibutyl tin dilaurate, dibutyl tin diacetate, dibutyl tin oxide, stannous octanoate, and other urethane-forming catalysts known in the art. The preferred catalyst is dibutyl tin dilaurate. Amounts used typically range between 0.1 and 3 weight percent of binder solids.

Unpigmented coating compositions are prepared by mixing the cationic resin blend with the crosslinking agent and optionally any additives such as catalysts, solvents, surfactants, flow modifiers, defoamers, or other additives. This mixture is then dispersed in water by any of the known methods. A particularly preferred method is the technique known as phase-inversion emulsification, wherein water is slowly added with agitation to the above mixture, usually at temperatures ranging from ambient to 90°C, until the phases invert to form an organic phase-in-water dispersion. The solids content of the aqueous dispersion is usually between 5 and 30 percent by weight and preferably between 10 and 25 percent by weight for application by electrodeposition.

Pigmented coating compositions are prepared by adding a concentrated dispersion of pigments and extenders to the unpigmented coating compositions. This pigment dispersion is prepared by grinding the pigments together with a suitable pigment grinding vehicle in a suitable mill as known in the art.

Pigments and extenders known in the art are suitable for use in these coatings including pigments which increase the corrosion resistance of the coatings. Examples of useful pigments or extenders include titanium dioxide, talc, clay, lead oxide, lead silicates, lead chromates, carbon black, strontium chromate, and barium sulfate.

Pigment grinding vehicles are known in the art. A preferred pigment grinding vehicle for use in this invention consists of a water-soluble cationic resinous product, water, and a minor amount of glycol ether solvent. The cationic resinous product is prepared by reacting an epichlorohydrin/bisphenol A condensation product having an epoxide group content of 8 percent with a nucleophile, an acid, and water in a similar fashion as described above for the cationic resins used in the preferred embodiment of the invention. The water-soluble product may be diluted with water to form a clear solution useful as a pigment grinding vehicle.

The pH and/or conductivity of the coating compositions may be adjusted to desired levels by the addition of compatible acids, bases, and/or electrolytes known in the art. Other additives such as solvents, surfactants, defoamers, anti-oxidants, bactericides, etc. may also be added to modify or optimize properties of the compositions or the coating in accordance with practices known to those skilled in the art.

Although the coating compositions of the invention may be applied by any conventional technique for aqueous coatings, they are particularly useful for application by cathodic electrodeposition, wherein the article to be coated is immersed in the coating composition and made the cathode, with a suitable anode in contact with the coating composition. When sufficient voltage is applied, a film of the coating deposits on the cathode and adheres. Voltage may range from 10 to 1,000 volts, typically 50 to 500. The film thickness achieved generally increases with increasing voltage. In the case of the coating compositions of the invention, thicker films are achieved by incorporation of the diglycidyl ether of a polyetherpolyol/polyisocyanate prepolymer into the coating dispersion of the invention. Also, control over the final thickness may be exercised by adjusting the amount of that component used. Current is allowed to flow for between a few seconds to several minutes, typically two minutes, over which time the current usually decreases. Any electrically conductive substrate may be coated in this fashion, especially metals such as steel and aluminum. Other aspects of the electrodeposition process, such as bath maintainence, are conventional. After deposition, the article is removed from the bath and typically rinsed with water to remove that coating composition which does not adhere. The uncured coating film on the article is cured by heating at elevated temperatures, ranging from 200°F to 400°F (93°C to 204°C), for periods of 1 to 60

minutes.

Example 1

A. Preparation of Polyurethane Crosslinkers

Into an agitated closed reaction vessel equipped with temperature control means and a means for providing a nitrogen atmosphere, were charged the indicated amount of diisocyanate and dibutyl tin dilaurate catalyst in an amount sufficient to provide 2.8 parts by weight (pbw) of catalyst per 100 pbw of diisocyante (toluene diisocyanate). To the mixture of diisocyanate and catalyst was slowly added the polyether polyol (a polyoxypropylene glycol having a number average molecular weight of 425, commercially available from The Dow Chemical Company as VORANOLTM P425) while maintaining the temperature below 60°C. Upon completion of the polyol addition, the blocking agent (2-ethyl hexanol) was slowly added while maintaining the temperature below 60°C. Upon completion of the blocking agent, the temperature was maintained below 60°C for one hour. No detectable free isocyanate was detected by infrared spectrophotometric analysis. The amounts of the reactant components are given in the following Table I.

TABLE I

| COMPONENTS | CROSSLINKER A* pbw/moles | CROSSLINKER B pbw/moleS | CROSSLINKER C pbw/moles |
|---|---|---|---|
| Diisocyanate | 40/1 | 36.6/4 | 33.6/2 |
| Polyether polyol | 0/0 | 22.4/1 | 41.0/1 |
| Blocking agent | 60/2 | 41.0/6 | 15.4/2 |

*Not an example of the present invention.

B. Preparation of Cationic Electrodeposition Resin Dispersion

Into a closed, agitated reaction vessel were charged 250 grams of a diglycidyl ether of bisphenol A having an epoxide equivalent weight (EEW) of 1875, 28 grams of propylene glycol phenyl ether and 28 grams of propylene glycol methyl ether acetate. The contents of the reaction vessel was heated to 130°C for 30 minutes to thoroughly mix the contents. The resulting mixture was cooled to 100°C and 125 grams of crosslinker A, B or C was added. This mixture was cooled to 80°C and 10 grams of metyl ethanolamine was added to produce the amine of the epoxy resin. A slight exotherm occured. After one hour, a solution of 8 grams of glacial acetic acid in 60 grams of deionized water was added slowly. After 15 minutes, 6 grams of dibutyl tin dilaurate catalyst was added. While continuously stirring, a cationic dispersion was prepared by the slow addition of 1668 grams of deionized water to this mixture.

C. Preparation of Pigment Grinding Vehicle

A pigment grinding vehicle was prepared by reacting at 70°C, 87.2 grams of a diglycidyl ether of bisphenol A having an EEW of 629 containing 9.6 grams of ethylene glycol n-butyl ether and 10.4 grams of methyl ethanolamine. After one hour, 12.4 grams of lactic acid in 64 grams of water was added. Upon completion of the onium forming reaction, 246.4 grams of water was slowly added while agitating continuously at 60°C.

D. Preparation of Pigment Paste

A pigment paste was prepared by mixing 430 grams of the above prepared pigment grinding vehicle, 342 grams of ASP 200 clay, 62.7 grams of lead silicate, 10.3 grams of carbon black, 139.7 grams of titanium dioxide and 14.3 grams of lead silicon chromate. This mixture was accomplished in a pigment grinding mill.

One hundred grams of the pigment paste was added to each of the three dispersions prepared in B above. Steel panels pretreated with zinc phosphate were cationically electrocoated in baths of these dispersions at 250, 300 and 350 volts for 2 minutes at a bath temperature of 27° C. After rinsing in deionized water, the wet films were baked at 177° C for 30 minutes. Film thicknesses were measured and are reported in Table II.

TABLE II

| CROSSLINKER | Film Thickness (mils/mm) @250V | Film Thickness (mils/mm) @300V | Film Thickness (mils/mm) @350V |
|---|---|---|---|
| A* | 0.740/0.0188 | 0.67/0.0170 | 0.62/0.0157 |
| B | 0.80/0.0203 | 0.76/0.00193 | 0.80/0.0203 |
| C | 1.15/0.0292 | 1.14/0.0290 | 1.15/0.0292 |

*Not an example of the present invention.

Example 2

A. Preparation of Polyurethane Crosslinker

A polyurethane crosslinker was prepared by blocking 626 grams of a 60% by weight solution of toluene diisocyanate/trimethylol propane prepolymer in methoxy propyl acetate solvent (commercially available as SPENKEL™ P49-A6-60 from Spencer Kellogg) with 200 grams of 2-ethylhexanol. The diisocyanate was placed in an agitated, closed reaction vessel under a dry nitrogen blanket. A catalyst, 0.62 grams of dibutyl tin dilaurate was added followed by the slow addition of the 2-ethylhexanol. The temperature was maintained below 60° C. After the addition, the product was held at 60° C for two hours. A second crosslinker, identical to crosslinker B in Example 1 was also used in this example.

B. Preparation of Cationic Electrodeposition Resin Dispersion

Into a closed, agitated reaction vessel were charged 225 grams of a diglycidyl ether of a polyoxypropylene glycol having an epoxide equivalent weight (EEW) of 190, 675 grams of a diglycidyl ether of bisphenol A having an EEW of 188, 397.2 grams of bisphenol A and 144.6 grams of p-nonyl phenol. The contents were heated to 90° C whereupon 1 gram of ethyltriphenylphosphonium acetate•acetic acid complex catalyst blended with 0.4 gram of methanol was added and the mixture heated at 1.5° C/minute to 150° C whereupon it exothermed to 170° C and was held there for one hour and then cooled to 130° C. The resultant resin had an EEW of 1564. Upon the addition of 158 grams of propylene glycol phenyl ether solvent, the mixture continued to cool. At 60° C, 68 grams of methyl ethanolamine was slowly added. After one hour, the reaction mixture was cooled to ambient temperature (~23° C).

Coating dispersion No. 1 was prepared by blending at 70° C, 251.7 grams of the above prepared resin with 165.2 grams of crosslinker prepared in Example 2-A above, 5.3 grams of dibutyl tin dilaurate catalyst and 17.5 grams of lactic acid in 60 grams of deionized water. After blending, 1431.7 grams of deionized water was slowly added while agitating to form the dispersion. This dispersion was not an example of the present invention. To this dispersion was added 134 grams of the pigment paste described in Example 1.

Coating dispersion No. 2 was prepared from the same resin by blending, at 70° C, 235.3 grams of the epoxy resin with 106.3 grams of crosslinker B prepared in Example 1, 26.6 grams of methoxypropyl acetate

solvent, 5.0 grams of dibutyltin dilaurate catalyst and 16.4 grams of lactic acid in 60 grams of water. The dispersion was formed by slowly adding 1415.4 grams of water at 70° C while agitating. This dispersion was pigmented by adding 127 grams of the pigment paste described in Example 1.

Both pigmented dispersions were used to cationically electrocoat steel panels pretreated with zinc phosphate in baths of these dispersions at 250, 300 and 350 volts for 2 minutes at a bath temperature of 27° C. After rinsing in deionized water, the wet films were baked at 177° C for 30 minutes. Film thicknesses were measured and are reported in Table III.

TABLE III

| COATING DISPERSION No. | Film Thickness (mils/mm) @250V | Film Thickness (mils/mm) @300V | Film Thickness (mils/mm) @350V |
|---|---|---|---|
| 1* | 0.69/0.0175 | 0.83/0.0211 | 0.94/0.0240 |
| 2 | 1.18/0.0300 | 1.46/0.0371 | ruptured |

*Not an example of the present invention.

The data in Table III shows that the film thickness is greater when the toluene diisocyanate prepolymer contains a polyether polyol than when it contains a polyol free of ether oxygen atoms.

Example 3

A. Preparation of Polyurethane Crosslinkers

Three polyurethane crosslinkers were prepared from isophorone diisocyanate. Crosslinker D contains no polyether polyol. Crosslinker E contains a polyoxy propylene diol having a number average molecular weight of 425 (VORANOLTM P425 commercially available from The Dow Chemical Company). Crosslinker F contains a polyether triol (VORANOLTM CP 4702 commercially available from The Dow Chemical Company). The blocking agent was 2-ethylhexanol. The procedure was the same as that employed in Example 1-A. The amounts of the components are given in the following Table IV.

TABLE IV

| COMPONENTS | CROSSLINKER D* pbw/mole ratio of isocyanate to polyol | CROSSLINKER E pbw/mole ratio of isocyanate to polyol | CROSSLINKER F pbw/mole ratio of isocyanate to polyol |
|---|---|---|---|
| Diisocyanate | 55.5/1 | 38.7/2 | 11.6/3 |
| Polyether polyol | 0/0 | 37.2/1[a] | 81.6/1[b] |
| Blocking agent | 54.5/2 | 24.1/2 | 6.8/3 |

*Not an example of the present invention.
[a]The polyether polyol is a diol.
[b]The polyether polyol is a triol.

The crosslinkers were mixed with 25 grams of propylene glycol methyl ether acetate in an amount corresponding to 25 grams of solvent per 100 grams of blocked polyisocyanate.

B. Preparation of Cationic Electrodeposition Resin.

A cationic electrodeposition resin was prepared in the following manner. Into a 2-liter, round-bottomed flask fitted with a nitrogen inlet, thermometer, mechanical stirrer, and condenser were charged 1410 grams of an epoxy resin which was the condensation product of bisphenol A and epichlorohydrin having an epoxide equivalent weight of 187, 203.6 grams of nonyl phenol, and 590 grams of bisphenol A. The mixture

was stirred in a nitrogen atmosphere and heated to 90° C to form a clear mixture. A solution of 70 percent by weight of ethyltriphenylphosphonium acetate•acetic acid complex in methanol (5.0 grams) was added and the mixture heated to 150° C and allowed to exotherm. Peak exotherm temperature was controlled to below 200° C by cooling. The temperature was then maintained at 175° C until 60 minutes past peak exotherm when an epoxide equivalent weight of 1547 grams/equivalent was obtained.

This resin was cooled to 130° C and 248 grams of propylene glycol phenyl ether solvent was added. The resin solution was further cooled to 75° C and 106.7 grams of methylethanolamine was added and allowed to react for one hour at 75° C.

C. Preparation of Dispersions

Three dispersions were prepared in the following manner. To 200 grams of the cationic electrodeposition resin prepared in Example 3-B above at 60° C, was added 112.5 grams of polyurethane crosslinker D, E or F prepared in Example 3-A above and 5.0 grams of dibutyltin dilaurate catalyst. While agitating continuously, a cationic dispersion was prepared by adding to the resulting mixture at 60° C, 6.7 grams of glacial acetic acid in 50 grams of water. After blending well, an additional 1426 grams of water was added slowly to produce a dispersion.

These cationic dispersions were pigmented by blending 6.3 grams of the pigment paste prepared in Example 1-D per 100 grams of dispersion. These were elctrodeposited and baked as described in Example 1. The resulting film thicknesses were measured and reported in Table V. The coatings were applied at 150, 200 and 250 volts.

TABLE V

| CROSSLINKER | Film Thickness (mils/mm) @150V | Film Thickness (mils/mm) @200V | Film Thickness (mils/mm) @250V |
|---|---|---|---|
| D* | 0.25/0.00635 | 0.36/0.00914 | 0.51/0.0130 |
| E | 0.31/0.00784 | 0.47/0.0119 | 0.93/0.0236 |
| F | 0.51/0.0130 | 1.270/.0323 | 3.96/0.101 |

*Not an example of the present invention.

The data in Table IV shows that the film thickness increases as the proportion of polyether polyol increases in the coating.

EXAMPLE 4

Example 3 was reproduced using dicyclohexylmethane-4,4′-diisocyanate in place of isophorone diisocyanate and methyl ethyl ketoxime in place of 2-ethylhexanol. The following Table VI gives the compositions of these three polyurethane crosslikers.

TABLE V1

| COMPONENTS | CROSSLINKER G* pbw/mole ratio of isocyanate to polyol | CROSSLINKER H pbw/mole ratio of isocyanate to polyol | CROSSLINKER I pbw/mole ratio of isocyanate to polyol |
|---|---|---|---|
| Diisocyanate | 60.1/1 | 46.5/2 | 13.7/3 |
| Polyether polyol | 0/0 | 37.5/1[a] | 81.8/1[b] |
| Blocking agent | 39.9/2 | 16/1 | 4.5/3 |

*Not an example of the present invention.
[a]The polyether polyol is a diol.
[b]The polyether polyol is a triol.

These crosslinkers were formulated into three pigmented dispersions and were electrodeposited as

described in Example 3. The results are given in Table VII.

TABLE VII

| CROSSLINKER | Film Thickness (mils/mm) @150V | Film Thickness (mils/mm) @200V | Film Thickness (mils/mm) @250V |
|---|---|---|---|
| G* | 0.32/.00813 | 0.42/0.0107 | 0.50/0.0127 |
| H | 0.38/.00965 | 0.51/0.0130 | 0.61/0.0155 |
| I | 0.39/.00990 | 0.62/0.0157 | 0.81/0.0206 |

*Not an example of the present invention.

The data in Table VII shows that the film thickness increases as the proportion of the polyether polyol in the coating increases.

EXAMPLE 5

Two polyurethane crosslinkers were prepared using the procedure of Example 1-A. The components employed are given in the following Table VIII.

TABLE VIII

| COMPONENTS | CROSSLINKER J* pbw | CROSSLINKER K pbw |
|---|---|---|
| TOLUENE diisocyanate | 104.9 | 75.7 |
| Polyether polyol | 40.2[a] | 92.5[b] |
| Blocking agent[c] | 52.2 | 37.9 |
| catalyst | 0.36 | 0.23 |
| solvent[d] | 49.1 | 51.4 |

*Not a crosslinker of the present invention

[a]The polyol is dipropylene glycol.

[b]The polyol is polyoxypropylene glycol having a number average molecular weight of 425.

[c]The blocking agent is methyl ethyl ketoxime.

[d]The solvent is propylene glycol methyl ether acetate.

An epoxy resin having an EEW of 1687 was prepared as described in Example 2 employing 596 grams of a diglycidyl ether of a polyoxypropylene glycol having an EEW of 190, 1389 grams of a diglycidyl ether of bisphenol A having an EEW of 188, 711.8 grams of bisphenol A, 305.6 grams of p-nonyl phenol, 4.1 grams of ethyltriphenylphosphonium acetate•acetic acid complex catalyst in 1.7 grams of methanol, and 1569 grams of xylene. This resin was then reacted with 132.6 grams of methylethanolamine as described in Example 2.

Five dispersions were prepared as described in Example 2-B employing the components listed in Table IX.

TABLE IX

| COMPONENT | 0% Crosslinker K[1]* | 25% Crosslinker K[1] | 50% Crosslinker K[1] | 75% Crosslinker K[1] | 100% Crosslinker K[1] |
|---|---|---|---|---|---|
| Resin-Amine, g | 283.6 | 278.4 | 270.0 | 270.0 | 270.0 |
| Cross-linker J, g | 91.5 | 67.3 | 43.5 | 21.8 | 0.00 |
| Cross-linker K | 0.0 | 32.4 | 62.8 | 94.2 | 125.6 |
| Propylene glycol methyl ether acetate, g | 5.9 | 4.3 | 2.9 | 1.4 | 0.0 |
| xylene, g | 0.0 | 0.3 | 0.5 | 0.8 | 1.2 |
| Dibutyltin dilaurate, g | 5.2 | 5.3 | 5.3 | 5.4 | 5.5 |
| Lactic Acid, g | 8.5 | 8.3 | 8.1 | 8.1 | 8.1 |
| Water, g | 1597.8 | 1604.9 | 1591.4 | 1626.1 | 1660.7 |

*Not an example of the present invention.
[1]% based on combined weight of crosslinkers J and K.

The dispersions of Table IX were pigmented by blending 6.3 grams of the pigment paste of Example 1-D per 100 grams of each of the five dispersion. Coatings were applied by electrodeposition as described in Example 1 and were cured by baking at 135°C for 30 minutes. The resulting film thicknesss were measured and are reported in Table X.

TABLE X

| % Crosslinker K | Film Thickness (mils/mm) @225V | Film Thickness (mils/mm) @250V | Film Thickness (mils/mm) @275V | Film Thickness (mils/mm) @300V |
|---|---|---|---|---|
| 0* | 0.54/0.0137 | 0.61/0.0155 | 0.58/0.0147 | 0.61/0.0155 |
| 25 | 0.55/0.0140 | 0.61/0.0155 | 0.63/0.0160 | 0.69/0.0175 |
| 50 | 0.59/0.0150 | 0.62/0.0158 | 0.65/0.0165 | 0.72/0.0174 |
| 75 | 0.57/0.0145 | 0.69/0.0175 | 0.68/0.0173 | 0.69/0.0175 |
| 100 | 0.66/0.0168 | 0.76/0.0254 | 0.76/0.0254 | 0.84/0.0213 |

*Not an example of the present invention.

The data in Table X shows that the film thickness generally increases as the portion of the polyether polyol component (crosslinker K) in the coating increases.

## Claims

1. In a cathodic electrodepositable coating composition comprising an aqueous dispersion of (1) at least one blocked isocyanate crosslinker and (2) at least one cationic epoxy-based resin; characteirzed by employing as at least a portion of component (1), at least one blocked isocyanate-containing prepolymer crosslinker composition wherein said isocyanate-containing prepolymer is the reaction product of a polyisocyanate and a polyether polyol.

2. A cathodic electrodepositable coating composition of Claim 1 wherein component (1) contains at least 20 percent of the blocked isocyanate-containing prepolymer crosslinker composition by weight.

3. A cathodic electrodepositable coating composition of Claim 2 wherein the isocyanate-containing prepolymer is prepared by reacting a polyisocyanate with a polyether polyol represented by the formula

$$Z-((O-\overset{\overset{\displaystyle R'''}{|}}{CH}-(CH_2-)_{n'})_m-OH)_x$$

wherein each R‴ is independently hydrogen or an aliphatic, cycloaliphatic or aromatic hydrocarbon group having from 1 to 10 carbon atoms; Z is the residue remaining from the removal of x hydroxyl groups from an organic compound containing at least 2 hydroxyl groups per molecule; m has an average value of from 2 to 30; n′ has a value from 1 to 6 and x has a value from 2 to 6.

4. A cathodic electrodepositable coating composition of Claim 3 wherein Z is the residue of propylene glycol, glycerine, trimethylolpropane, ethylene glycol, 1,4-butanediol, or 1,6-hexane diol; the polyisocyante employed to prepare the isocyanate prepolymer is toluene diisocyanate, isophorone diisocyanate, diphenylmethane diisocyanate, hydrogenated diphenylmethane diisocyanate, hexamethylene diisocyanate or combinations thereof; and the blocking agent is an aliphatic or aromatic alcohol, an oxime, a lactam, an N,N-dialkylamide, or an ester of α-hydroxyl group-containing carboxylic acids.

5. A cathodic electrodepositable coating composition of Claim 4 wherein component (2) is selected from the group consisting of (a) an advanced resin prepared by reacting a diglycidyl ether of a dihydric phenol with either a dihydric phenol or an aliphatic diol or a combination thereof, (b) an advanced resin prepared by reacting a diglycidyl ether of an aliphatic diol with either a dihydric phenol or an aliphatic diol or a combination thereof, (c) the advanced resin (a) which has been partially capped with a mono-functional phenolic compound, (d) the advanced resin (b) which has been partially capped with a mono-functional phenolic compound, and (e) any combination thereof; and wherein component (2) has been converted to a cationic form by reaction with a nucleophilic compound and an acid.

6. A cathodic electrodepositable coating composition of Claim 5 wherein component (1) provides from about 0.2 to about 1.2 blocked isocyanate groups per active hydroxyl or amine group of component (2).

7. A cathodic electrodepositable coating composition of Claim 1 or Claim 2 wherein a catalyst is employed to accelerate curing of the coating.

8. A cathodic electrodepositable coating composition of Claim 1 or Claim 2 wherein at least one of solvents, surfactants, flow modifiers, defoamers,or pigments is incorporated into the coating composition.

9. A cathodic electrodepositable coating composition of Claim 1 or Claim 2 which contains from 60 to 95 percent water by weight.

10. A method of coating a cationic, epoxy resin-based composition onto an object having an electrodeconductive surface comprising the steps of

(1) immersing the electroconductive object into a coating bath comprising an aqueous dispersion of (A) at least one blocked isocyanate crosslinker and (B) at least one cationic epoxy-based resin;

(2) passing an electric current through said bath sufficient to electrodeposit a coating of said compositon onto the object by providing a difference in electrical potential between the object and an electrode that is

(a) spaced apart from said object;

(b) in electrical contact with said bath; and

(c) electrically positive in relation to said object; and

(3) thermally curing the deposited coating; characterized by employing as at least a portion of component (A) in step (1) at least one blocked isocyanate-containing prepolymer crosslinker composition wherein said isocyanate-containing prepolymer is the reaction product of a polyisocyanate and a polyether polyol.